(19) Europäisches Patentamt
European Patent Office
Office européen des brevets

(11) EP 4 597 176 A1

(12) EUROPEAN PATENT APPLICATION
published in accordance with Art. 153(4) EPC

(43) Date of publication:
06.08.2025 Bulletin 2025/32

(21) Application number: 22960795.7

(22) Date of filing: 27.09.2022

(51) International Patent Classification (IPC):
G01W 1/08 (2006.01)

(52) Cooperative Patent Classification (CPC):
G01W 1/08

(86) International application number:
PCT/JP2022/035849

(87) International publication number:
WO 2024/069731 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventors:
• SATO, Yuki
  Tokyo 100-8310 (JP)
• AKAMA, Kei
  Tokyo 100-8310 (JP)
• YAMADA, Tetsutaro
  Tokyo 100-8310 (JP)

(74) Representative: Hoffmann Eitle
Patent- und Rechtsanwälte PartmbB
Arabellastraße 30
81925 München (DE)

(54) **WEATHER DATA ASSIMILATION ASSISTANCE DEVICE, WEATHER DATA ASSIMILATION ASSISTANCE METHOD, PROGRAM, AND WEATHER DATA ASSIMILATION ASSISTANCE SYSTEM**

(57)    A weather data assimilation assistance device (1) includes a wet delay calculator (12) and a wet delay variance calculator (13). The wet delay calculator calculates a wet delay in a satellite line-of-sight based on observable data indicating an observable of a radio wave from a positioning satellite measured by a receiver to receive the radio wave from the positioning satellite and based on atmospheric delay data indicating an atmospheric delay in the satellite line-of-sight calculated based on a correction value for at least one of a satellite clock or a satellite orbit of the positioning satellite, and outputs data indicating the wet delay. The wet delay variance calculator calculates a variance of the wet delay based on the wet delay and a covariance matrix of the correction value for at least one of the satellite clock or the satellite orbit, and outputs data indicating the variance of the wet delay.

FIG.1

## Description

Technical Field

The present disclosure relates to a weather data assimilation assistance device, a weather data assimilation assistance method, a program, and a weather data assimilation assistance system.

Background Art

The atmosphere is an error factor that causes a delay in signals from a positioning satellite such as the Global Positioning System (GPS). The state of the atmosphere with this characteristic can be determined by determining such a delay caused by the atmosphere (hereafter referred to as an atmospheric delay) based on signals received from the positioning satellite on the ground. A delay caused by water vapor in the atmosphere (hereafter referred to as a wet delay) can be calculated by subtracting, from the atmospheric delay, a delay that occurs when the atmosphere is dry (hereafter referred to as a dry delay). This allows estimation of the vapor content in the atmosphere. The accuracy of numerical weather prediction is expected to be improved by assimilating the estimated vapor content with other weather data.

An estimate of the atmospheric delay on a signal path connecting the positioning satellite and a receiver includes errors caused by factors other than the atmosphere, such as a satellite clock correction error and a satellite orbit correction error. Thus, techniques have been developed for correcting errors caused by factors other than the atmospheric delay by determining differences between estimates of the atmospheric delay at multiple receivers.

For example, Patent Literature 1 describes an atmosphere-associated amount deriving device that acquires a first phase difference based on the phase of a radio wave transmitted from a transmission station and received by a receiver at a first point, and a second phase difference based on the phase of a radio wave transmitted from the transmission station and received by a receiver at a second point, and calculates the difference between the first phase difference and the second phase difference. The atmosphere-associated amount deriving device then derives, based on the calculated difference, a relative atmosphere-associated amount that is the difference between a first atmosphere-associated amount from the transmission station to the first point and a second atmosphere-associated amount from the transmission station to the second point.

Citation List

Patent Literature

Patent Literature 1: Unexamined Japanese Patent Application Publication No. 2017-207459

Summary of Invention

Technical Problem

The technique described in Patent Literature 1 is not effectively applicable to a wide area in which, for example, the receivers are distant from one another, or no other receivers are located nearby. Errors that cannot be corrected are to be estimated correctly for assimilation with other climate data. The assimilation uses weighting based on such errors, or for example, uses less weighting when errors are estimated to be large.

In response to the above issue, an objective of the present disclosure is to estimate errors included in an estimate of a wet delay more accurately.

Solution to Problem

To achieve the above objective, a weather data assimilation assistance device according to an aspect of the present disclosure includes a wet delay calculator and a wet delay variance calculator. The wet delay calculator calculates a wet delay in a satellite line-of-sight based on observable data and atmospheric delay data, and outputs data indicating the wet delay. The observable data indicates an observable of a radio wave from a positioning satellite measured by a receiver to receive the radio wave from the positioning satellite. The atmospheric delay data indicates an atmospheric delay in the satellite line-of-sight. The atmospheric delay is calculated based on a correction value for at least one of a satellite clock of the positioning satellite or a satellite orbit of the positioning satellite. The wet delay variance calculator calculates a variance of the wet delay based on the wet delay and a covariance matrix of the correction value for at least one of the satellite clock of the positioning satellite or the satellite orbit of the positioning satellite, and outputs data indicating the variance of the wet delay.

Advantageous Effects of Invention

The device according to the above aspect of the present disclosure calculates the variance of the wet delay in the satellite line-of-sight using the covariance matrix of the correction value for at least one of the satellite clock of the positioning satellite or the satellite orbit of the positioning satellite and provides, as the wet delay data, the wet delay in the satellite line-of-sight and the variance of the wet delay, allowing more accurate estimation of an error included in the estimate of the wet delay.

Brief Description of Drawings

FIG. 1 is a functional block diagram of a weather data assimilation assistance device according to Embodiment 1;

FIG. 2 is a flowchart of a weather data assimilation assistance process in Embodiment 1;

FIG. 3 is a functional block diagram of a weather data assimilation assistance device according to Embodiment 2;

FIG. 4 is a block diagram of a weather data assimilation assistance system according to a modification of Embodiment 2, illustrating an example structure;

FIG. 5 is a functional block diagram of a weather data assimilation assistance device according to Embodiment 3;

FIG. 6 is a functional block diagram of a weather data assimilation assistance device according to Embodiment 4;

FIG. 7 is a block diagram of the weather data assimilation assistance device according to Embodiments 1 to 4, illustrating an example hardware configuration;

FIG. 8 is a functional block diagram of a weather data assimilation assistance device according to a modification of Embodiment 1;

FIG. 9 is a functional block diagram of a weather data assimilation assistance device according to a modification of Embodiment 2;

FIG. 10 is a functional block diagram of a weather data assimilation assistance device according to a modification of Embodiment 3; and

FIG. 11 is a functional block diagram of a weather data assimilation assistance device according to a modification of Embodiment 4.

Description of Embodiments

A weather data assimilation assistance device, a weather data assimilation assistance method, a program, and a weather data assimilation assistance system are described in detail below with reference to the drawings. Like reference signs denote like or corresponding components in the drawings. In the present embodiment, an atmospheric delay in the satellite line-of-sight is calculated based on an observable of radio waves from a positioning satellite and correction information about the satellite clock and the satellite orbit, and a wet delay in the satellite line-of-sight and the variance of the wet delay are calculated based on the atmospheric delay in the satellite line-of-sight and the correction information about the satellite clock and the satellite orbit. The positioning satellite is hereafter simply referred to as a satellite.

Embodiment 1

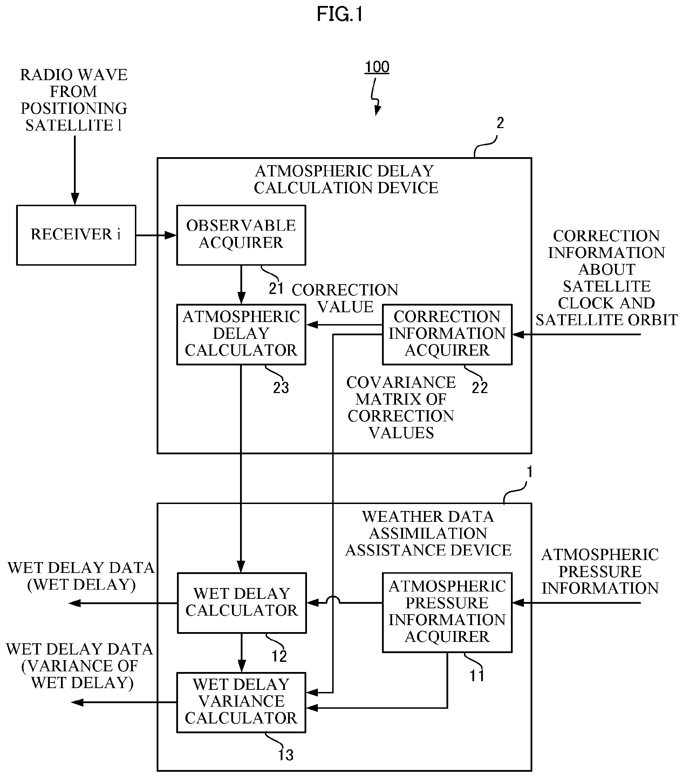

As illustrated in FIG. 1, a weather data assimilation assistance system 100 includes a receiver i, an atmospheric delay calculation device 2, and a weather data assimilation assistance device 1. The receiver i receives radio waves from a satellite l. The atmospheric delay calculation device 2 calculates an atmospheric delay in the satellite line-of-sight based on an observable of radio waves from the satellite l measured by the receiver i and correction information about the satellite clock and the satellite orbit of the satellite l. The weather data assimilation assistance device 1 calculates a wet delay in the satellite line-of-sight based on the atmospheric delay in the satellite line-of-sight calculated by the atmospheric delay calculation device 2, calculates the variance of the wet delay in the satellite line-of-sight based on the wet delay in the satellite line-of-sight and the covariance matrix of correction values for the satellite clock and the satellite orbit, and outputs wet delay data including data indicating the wet delay in the satellite line-of-sight and data indicating the variance of the wet delay in the satellite line-of-sight. Although the figure illustrates a single receiver i as a typical example, multiple receivers i may be included.

The receiver i receives radio waves from the satellite l, measures a pseudo range and a carrier phase, and transmits observable data indicating the measured observables to the atmospheric delay calculation device 2. When an observable of the pseudo range or an observable of the carrier phase alone is acquired, the acquired observable alone may be transmitted.

The atmospheric delay calculation device 2 includes an observable acquirer 21 that acquires the observable data from the receiver i, a correction information acquirer 22 that acquires the correction information about the satellite clock and the satellite orbit, and an atmospheric delay calculator 23 that calculates the atmospheric delay in the satellite line-of-sight based on the observable data and the correction information about the satellite clock and the satellite orbit. The atmospheric delay in the satellite line-of-sight is hereafter simply referred to as the atmospheric delay. The correction information about the satellite clock and the satellite orbit acquired by the correction information acquirer 22 includes correction values for the satellite clock and the satellite orbit, and a covariance matrix of the correction values. The correction information acquirer 22 transmits the correction values for the satellite clock and the satellite orbit to the atmospheric delay calculator 23.

For example, one reference describing a technique for calculating the atmospheric delay is Yoshinori Shoji et al., GPS Meteorology: Research on the Construction of GPS Water Vapor Information System and Application to Meteorology, Geodesy, and Hydrology. Journal of the Geodetic Society of Japan 2009, 55(1).

In the example below, the atmospheric delay calculator 23 calculates the atmospheric delay using an observation model described in the above reference. In an observation model expressed by Formula 1 below, $\Phi_i^l$ on the left side is an observable of the carrier phase of radio waves emitted from the satellite l and measured by the receiver i. The right side includes an atmospheric delay $dT_i^l$.

$$\text{Formula 1}$$

$$\Phi_i^l = \rho_i^l + N_i^l\lambda + dT_i^l - dI_i^l + c(\delta_i - \delta^l) + \varepsilon_i$$

In Formula 1, $\rho_i^l$ is the distance between the satellite and the receiver, $N_i^l$ is a carrier phase ambiguity, $\lambda$ is the wavelength of radio waves, $dT_i^l$ is the atmospheric delay, $dI_i^l$ is an ionospheric delay, c is the velocity of light in vacuum, $\delta^l$ is the satellite clock, $\delta_i$ is the receiver clock, and $\varepsilon_i$ is a residual. The atmospheric delay $dT_i^l$ can be replaced with a model expressed by Formula 2 below.

$$\text{Formula 2}$$

$$dT_i^l = m(\theta^l) \cdot [ZTD_i + \cot\theta^l(G_{ni}\cos\varphi^l + G_{ei}\sin\varphi^l)]$$

The atmospheric delay calculator 23 estimates, as three unknown parameters, a zenith atmospheric dely $ZTD_i$ that is the atmospheric delay in the zenith direction, a primary gradient $G_{ni}$ of the atmospheric delay in the north-south direction, and a primary gradient $G_{ei}$ of the atmospheric delay in the east-west direction. The primary gradients $G_{ni}$ and $G_{ei}$ may not be estimated and may not be included. In Formula 2, $m(\theta^l)$ is a mapping function that is the ratio of the zenith atmospheric delay to the atmospheric delay, $\theta^l$ is the elevation angle of the satellite, and $\sigma l$ is the azimuth angle of the satellite calculated based on an approximate position of the receiver and an approximate position of the satellite. The elevation angle $\theta^l$ and the azimuth angle $\sigma l$ are calculated based on, for example, a broadcast ephemeris delivered from the satellite.

As expressed by Formula 3 below, an estimate of the atmospheric delay can be acquired using estimates of the unknown parameters acquired with, for example, Kalman filtering, and a posterior residual $dz_i^l$. The primary gradients $G_{ni}$ and $G_{ei}$ may not be included when not estimated.

$$\text{Formula 3}$$

$$\widetilde{dT_i^{l\prime}} = m(\theta^l) \cdot \left[\widetilde{ZTD_i} + \cot\theta^l\left(\widetilde{G_{ni}}\cos\varphi^l + \widetilde{G_{ei}}\sin\varphi^l\right)\right] + dz_i^l$$

In Formula 3, the hats indicate estimates to distinguish Formula 3 from Formula 2. In Formula 3, the dash indicates a corrected estimate of the atmospheric delay that is corrected by adding the posterior residual $dz_i^l$. The posterior residual $dz_i^l$ includes a satellite clock correction error and a satellite orbit correction error. The atmospheric delay calculator 23 calculates the posterior residual $dz_i^l$ based on the correction values for the satellite clock and the satellite orbit included in the correction information about the satellite clock and the satellite orbit acquired by the correction information acquirer 22.

The posterior residual $dz_i^l$ can be expressed by Formula 4 below. In Formula 4, the hats indicate estimates calculated with Kalman filtering. The dashes indicate corrected $\rho_i^l$ and $\delta^l$ that are corrected by adding the correction values for the satellite clock and the satellite orbit.

Formula 4

$$dz_i^l = \Phi_i^l - \{\rho_i^{l'} + \widetilde{N_i^l}\lambda + m(\theta^l) \cdot [\widetilde{ZTD_i} + \cot\theta^l(\widetilde{G_{ni}}\cos\varphi^l + \widetilde{G_{ei}}\sin\varphi^l)] - \widetilde{dI_i^l} + c(\breve{\delta}_i - \delta^{l'})$$

The satellite clock corresponds to $\delta^l$, and the satellite orbit corresponds to the position of the satellite for calculating the distance $\rho_i^l$ between the satellite and the receiver. At least the carrier phase ambiguity $N_i^l$ and the receiver clock $\delta_i$ of the carrier phase ambiguity $N_i^l$, the ionospheric delay $dI_i^l$, and the receiver clock $\delta_i$ are estimated with Kalman filtering as the unknown parameters, together with the estimate of the atmospheric delay. The position of the receiver for calculating the distance $\rho_i^l$ between the satellite and the receiver may be known in advance or may be an unknown parameter. The ionospheric delay $dI_i^l$ may be provided as correction information about the ionosphere delay, may be estimated, or may be removed using observables of two frequencies described later.

The atmospheric delay calculator 23 transmits, to the weather data assimilation assistance device 1, atmospheric delay data indicating the calculated estimate of the atmospheric delay. The correction information acquirer 22 transmits, to the weather data assimilation assistance device 1, the covariance matrix of the correction values for the satellite clock and the satellite orbit included in the acquired correction information about the satellite clock and the satellite orbit.

The weather data assimilation assistance device 1 includes an atmospheric pressure information acquirer 11 that acquires atmospheric pressure information indicating the atmospheric pressure at the receiver i, a wet delay calculator 12 that calculates a wet delay in the satellite line-of-sight, and a wet delay variance calculator 13 that calculates a variance of the wet delay in the satellite line-of-sight based on the wet delay in the satellite line-of-sight and the covariance matrix of the correction values for the satellite clock and the satellite orbit. The wet delay in the satellite line-of-sight is hereafter simply referred to as a wet delay.

The atmospheric pressure information acquirer 11 transmits the acquired atmospheric pressure information to the wet delay calculator 12 and the wet delay variance calculator 13. The atmospheric pressure information acquirer 11 may acquire the atmospheric pressure information based on data indicating the latitude of the receiver i and the date or from an atmospheric pressure sensor included in the receiver i.

The wet delay calculator 12 calculates the wet delay based on the atmospheric delay data received from the atmospheric delay calculator 23 and the atmospheric pressure information received from the atmospheric pressure information acquirer 11. The wet delay may be calculated using, for example, the atmospheric pressure information alone or a numerical weather model. In the present embodiment, the wet delay is calculated using the atmospheric pressure information alone. For example, one reference describing a calculation method using the atmospheric delay alone is Pratap Misra; Per Enge, Global Positioning System: Signals, Measurements, and Performance, First Edition translated by GPS Society, Japan Institute of Navigation.

When calculating the wet delay with the calculation method described in the above reference, the wet delay calculator 12 first acquires, with Formula 5 below, a zenith dry delay $ZHDmodel_i(P_i)$ that is a dry delay in the zenith direction using an atmospheric pressure $P_i$ at the receiver i indicated by the atmospheric pressure information. In Formula 5, $Lat_i$ is the latitude of the receiver i, and $H_i$ is the height of an antenna above sea level.

Formula 5

$$ZHDmodel_i(P_i) = 0.002277(1 + 0.0026\cos2lat_i + 0.00028H_i)P_i$$

In one example, the zenith dry delay $ZHDmodel_i(P_i)$ is multiplied by a mapping function $m(\theta^l)$ expressed by Formula 6 below to acquire a dry delay $dThydrostatic_i^l$ in the line-of-sight as expressed by Formula 7 below. In Formula 6, $\theta^l$ is the elevation angle of the satellite. The dry delay in the line-of-sight is hereafter simply referred to as a dry delay.

Formula 6

$$m(\theta^l) = 1/(\sin\theta^l + 0.00143/\tan\theta^l + 0.0445)$$

Formula 7

$$dThydrostatic_i^l = m(\theta^l) \cdot ZHDmodel_i(P_i)$$

The above models for the zenith dry delay and the mapping function are typical examples among many models that have been developed, and different models may be used.

The wet delay calculator 12 subtracts the dry delay from the atmospheric delay to calculate the wet delay. The wet delay calculator 12 outputs data indicating the calculated wet delay as wet delay data. The wet delay calculator 12 transmits the data indicating the calculated wet delay to the wet delay variance calculator 13.

The wet delay variance calculator 13 calculates the variance of the wet delay based on the atmospheric pressure information received from the atmospheric pressure information acquirer 11 and the data indicating the wet delay received from the wet delay calculator 12, using, as indices for the satellite clock correction error and the satellite orbit correction error, the covariance matrix of the correction values for the satellite clock and the satellite orbit included in the correction information received from the correction information acquirer 22.

The wet delay is acquired with, for example, Formula 8 below.

Formula 8

$$
\begin{aligned}
dTwet_i^l &= \widetilde{dT_i^l} - dThydrostatic_i^l \\
&= m(\theta^l) \cdot \left[\widetilde{ZTD_i} + cot\theta^l(\widetilde{G_{ni}}cos\varphi^l + \widetilde{G_{ei}}sin\varphi^l)\right] + dz_i^l - m(\theta^l) \cdot ZHDmodel_i(P_i) \\
&= m(\theta^l) \cdot \left[\widetilde{ZTD_i} - ZHDmodel_i(P_i) + cot\theta^l(\widetilde{G_{ni}}cos\varphi^l + \widetilde{G_{ei}}sin\varphi^l)\right] + dz_i^l \\
&= m(\theta^l) \cdot \left[ZWD_i + cot\theta^l(\widetilde{G_{ni}}cos\varphi^l + \widetilde{G_{ei}}sin\varphi^l)\right] + dz_i^l
\end{aligned}
$$

Thus, the variance of a wet delay $dTwet_i^l$ is acquired with, for example, Formula 9 below.

Formula 9

$$
\sigma^2_{dTwet_i^l} = m(\theta^l)^2 \left[\sigma^2_{ZWD_i} + cot^2\theta^l cos^2\varphi^l \sigma^2_{G_{ni}} + cot^2\theta^l sin^2\varphi^l \sigma^2_{G_{ei}}\right] + \sigma^2_{SIS_i^l}
$$

In Formulas 8 and 9, $ZWD_i$ is an estimate of a zenith wet delay. The zenith wet delay is determined by subtracting the zenith dry delay from the estimate of the zenith atmospheric delay. The zenith dry delay may be calculated using, for example, the atmospheric pressure information alone or a numerical weather model. When calculated using the atmospheric pressure information alone, the zenith dry delay is acquired with Formula 10.

Formula 10

$$
ZWD_i = ZTD_i - ZWDmodel_i(P_i)
$$

In Formula 9, $\sigma_{ZWD_i}$ is the standard deviation of the zenith wet delay and is determined with, for example, Formula 11 below.

Formula 11

$$
\sigma_{ZWD_i} = \sqrt{\sigma^2_{ZTD_i} + \sigma^2_{ZHDmodel_i} + \left(\frac{\partial ZHDmodel_i}{\partial P_r}\sigma_{P_r}\right)^2}
$$

In Formula 11, $\sigma_{ZTD_i}$ is the standard deviation of the estimate $ZTD_i$ of the zenith atmospheric delay and is, for example, a value acquired through estimation by the atmospheric delay calculator 23 with Kalman filtering. In Formula 11, $\sigma_{ZHDmodel_i}$ is the standard deviation of a model error of the zenith dry delay and is, for example, a value proportional to the amount of cumulonimbus cloud over the receiver i, and $\sigma_{PR}$ is the error standard deviation of the observable of the atmospheric pressure. Any or all of $\sigma_{ZTD_i}$, $\sigma_{ZHDmodel_i}$, and $\sigma_{PR}$ may be not be included.

In Formula 9, $\sigma_{Gni}$ is the standard deviation of the estimate of the primary gradient of the atmospheric delay in the north-south direction, and $\sigma_{Gei}$ is the standard deviation of the estimate of the primary gradient of the atmospheric delay in the east-west direction. Either or both of $\sigma_{Gni}$ and $\sigma_{Gei}$ may not be included. The above formulas use $\sigma_{ZTDi}$, $\sigma_{Gni}$, and $\sigma_{Gei}$ included in the data indicating the wet delay, and also included in the atmospheric delay data.

The second term on the right side of Formula 9 is the satellite clock correction error and the satellite orbit correction error. This term is acquired with Formula 12 below using covariance matrix $P_{clk,orb}^l$ of the correction values for the satellite clock and the satellite orbit and a line-of-sight vector $los_i^l$.

Formula 12

$$\sigma_{SIS_i^l} = \sqrt{\begin{bmatrix} 1 & \boldsymbol{los_i^{l'}} \end{bmatrix} P_{clk,orb}^l \begin{bmatrix} 1 \\ \boldsymbol{los_i^l} \end{bmatrix}}$$

The wet delay variance calculator 13 outputs, as the wet delay data, the calculated data indicating the variance of the wet delay. For example, the wet delay calculator 12 and the wet delay variance calculator 13 may display the wet delay data on a display, may transmit the wet delay data to a user terminal, or may transmit the wet delay data to a weather data assimilation device. The received wet delay data transmitted to the weather data assimilation device is used by the weather data assimilation device to assimilate weather data. A user or the weather data assimilation device acquiring the wet delay data can estimate an error included in the estimate of the wet delay more accurately.

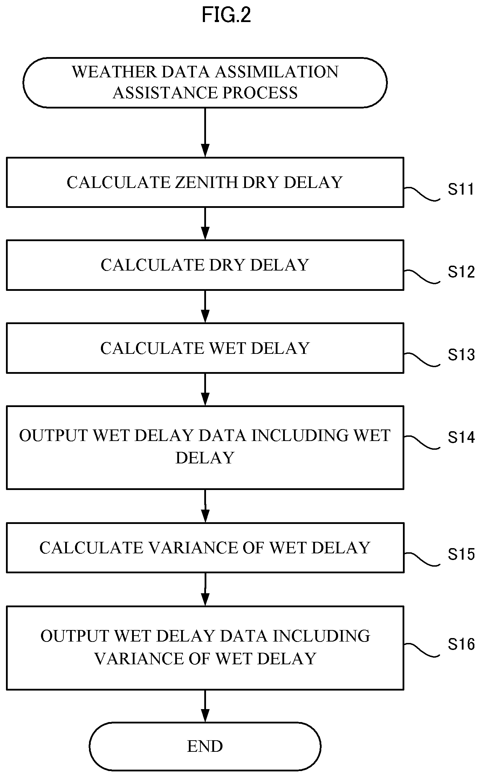

A weather data assimilation assistance process performed by the weather data assimilation assistance device 1 is now described with reference to FIG. 2. The weather data assimilation assistance process illustrated in FIG. 2 starts when, for example, the weather data assimilation assistance device 1 receives an instruction to generate the wet delay data. The wet delay calculator 12 calculates the zenith dry delay using the atmospheric pressure at the receiver i indicated by the atmospheric pressure information acquired by the atmospheric pressure information acquirer 11 (step S11). The wet delay calculator 12 multiplies the zenith dry delay by the mapping function to calculate the dry delay in the line-of-sight (step S12). The wet delay calculator 12 subtracts the dry delay from the atmospheric delay to calculate the wet delay (step S13).

The wet delay calculator 12 outputs the wet delay data including the calculated wet delay (step S14). The wet delay calculator 12 transmits the data indicating the calculated wet delay to the wet delay variance calculator 13.

The wet delay variance calculator 13 calculates the variance of the wet delay based on the atmospheric pressure information received from the atmospheric pressure information acquirer 11, the data indicating the wet delay received from the wet delay calculator 12, and the covariance matrix of the correction values for the satellite clock and the satellite orbit received from the correction information acquirer 22 in the atmospheric delay calculation device 2 (step S15). The wet delay variance calculator 13 outputs the wet delay data including the calculated variance of the wet delay (step S16) and ends the process.

The weather data assimilation assistance device 1 according to Embodiment 1 calculates the variance of the wet delay using the covariance matrix of the correction values for the satellite clock and the satellite orbit and provides the wet delay and the variance of the wet delay as the wet delay data, allowing more accurate estimation of an error included in the estimate of the wet delay.

Embodiment 2

In Embodiment 2, the weather data assimilation assistance device 1 includes the components of the atmospheric delay calculation device 2 in Embodiment 1 and internally generates the correction information about the satellite clock and the satellite orbit.

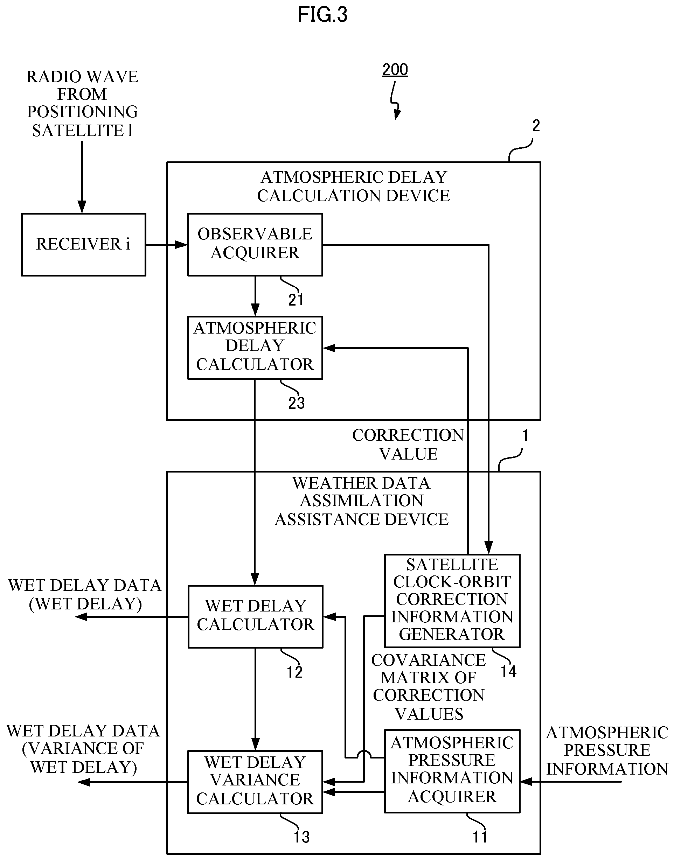

FIG. 3 illustrates a weather data assimilation assistance system 200 according to Embodiment 2. Similarly to the weather data assimilation assistance system 100, the weather data assimilation assistance system 200 includes the receiver i, an atmospheric delay calculation device 2, and a weather data assimilation assistance device 1. The receiver i functions in the same manner as in the weather data assimilation assistance system 100.

The atmospheric delay calculation device 2 includes the observable acquirer 21 and the atmospheric delay calculator 23. The weather data assimilation assistance device 1 includes, in addition to the atmospheric pressure information acquirer 11, the wet delay calculator 12, and the wet delay variance calculator 13, a satellite clock-orbit correction information generator 14 that generates correction information about the satellite clock and the satellite orbit from the observable data acquired by the observable acquirer 21.

The observable acquirer 21 transmits the observable data to the atmospheric delay calculator 23 and the satellite clock-orbit correction information generator 14.

The satellite clock-orbit correction information generator 14 generates, based on the observable data acquired by the observable acquirer, the correction information about the satellite clock and the satellite orbit including the covariance matrix of the correction values for the satellite clock and the satellite orbit. For example, the satellite clock-orbit correction information generator 14 uses, as time series data, the observable data indicating the observables measured by receivers located across the globe and receiving radio waves from each satellite, and processes the observable data with Kalman filtering. For example, one reference describing an example use of Kalman filtering is A. Rovira-Garcia et al., Fast Precise Point Positioning: A System to Provide 1 Correction for Single and Multi-frequency Navigation. Navigation 2016, 63(3).

In the example below, the satellite clock-orbit correction information generator 14 generates a covariance matrix using Kalman filtering described in the above reference. In Kalman filtering described above, in addition to clock and orbit errors (correction information) of each satellite, a zenith troposphere delay, a troposphere inclination, and a receiver clock error for each receiver, and a carrier phase bias (ionosphere-free combination of two-frequency ambiguity) of each receiver-satellite combination are estimated simultaneously as state quantities. The satellite clock-orbit correction information generator 14 extracts terms associated with the clock and orbit errors of each satellite from a covariance matrix of the state quantities in Kalman filtering.

For example, an observation equation using the observable measured by the receiver i receiving radio waves from the satellite l is expressed as Formula 13. In Kalman filtering described above, the state quantities are estimated with the same number of simultaneous observation equations as the number of combinations of receivers acquiring the observables and satellites.

Formula 13

$$\frac{f_{s_1}^2 \Phi_i^{l,s_1} - f_{s_2}^2 \Phi_i^{l,s_2}}{f_{s_1}^2 - f_{s_2}^2} = \rho(\boldsymbol{x}_i, \boldsymbol{x}^l) + \delta clk_i - \delta clk^l - \boldsymbol{los}_i^l \cdot \delta \boldsymbol{x}^l + dT_i^l + b_i^l + \varepsilon_{\phi_{IF},i}^{l,s_1 s_2}$$

$$\frac{f_{s_1}^2 P_i^{l,s_1} - f_{s_2}^2 P_i^{l,s_2}}{f_{s_1}^2 - f_{s_2}^2} = \rho(\boldsymbol{x}_i, \boldsymbol{x}^l) + \delta clk_i - \delta clk^l - \boldsymbol{los}_i^l \cdot \delta \boldsymbol{x}^l + dT_i^l + \varepsilon_{P_{IF},i}^{l,s_1 s_2}$$

The example in Formula 13 uses an ionosphere-free combination in which two frequency signals $s_1$ and $s_2$ are used to remove the effect of the ionospheric delay. In Formula 13, f is the frequency of each signal, $\Phi$ is a carrier phase observable, and P is a pseudo range observable. Additionally, $x_i$ is the known coordinate of the receiver i, $x^l$ is the reference position of the satellite l calculated from, for example, the broadcast ephemeris, ultra rapid products, and rapid products, and $\delta x^l$ is the error of the reference position with respect to the true position. Further, $los_i^l$ is the line-of-sight vector, $\delta clk^l$ is the clock error of the receiver i, $\delta clk^l$ is the clock error of the satellite l, $dT_i^l$ is the atmospheric delay that can be replaced with the model expressed by Formula 2 above, $b_i^l$ is the carrier phase bias, and $\varepsilon$ is the observation error. IF refers to ionosphere free.

The covariance matrix of the correction values for the satellite clock and the satellite orbit of the satellite l are each a submatrix of the covariance matrix of all state quantities with respect to the state quantities $\delta clk^l$ and $\delta x^l$. The satellite clock-orbit correction information generator 14 transmits the generated correction values for the satellite clock and the satellite orbit to the atmospheric delay calculator 23 in the atmospheric delay calculation device 2, and transmits the generated covariance matrix of the correction values for the satellite clock and the satellite orbit to the wet delay variance calculator 13. The other functional components are the same as in Embodiment 1.

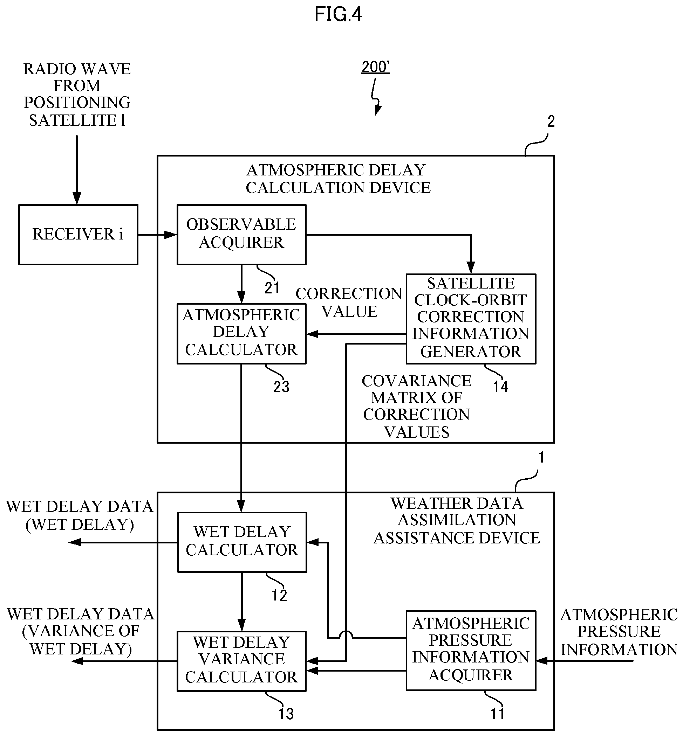

The satellite clock-orbit correction information generator 14 may be included in the atmospheric delay calculation device 2 in a modification. FIG. 4 illustrates the functional components of an atmospheric delay calculation device 2 and a weather data assimilation assistance device 1 in a weather data assimilation assistance system 200' according to this modification. The wet delay calculator 12 may not generate the wet delay data for all receivers i located across the globe. In other words, the satellite clock-orbit correction information generator 14 and the atmospheric delay calculator 23 may not use the observable data of the same receiver i.

The weather data assimilation assistance device 1 according to Embodiment 2 calculates the variance of the wet delay using the covariance matrix of the correction values for the satellite clock and the satellite orbit and provides the wet delay and the variance of the wet delay as the wet delay data, allowing more accurate estimation of an error included in the estimate of the wet delay. With the weather data assimilation assistance device 1 internally generating the correction information about the satellite clock and the satellite orbit, the estimation can be performed also when the correction information about the satellite clock and the satellite orbit cannot be acquired externally.

Embodiment 3

The structure according to Embodiment 3 determines, in addition to implementing the structure according to Embodiment 1, the amount of cumulonimbus cloud over the receiver i and calculates the error variance of the dry delay for calculating the wet delay variance based on the amount of cumulonimbus cloud over the receiver i.

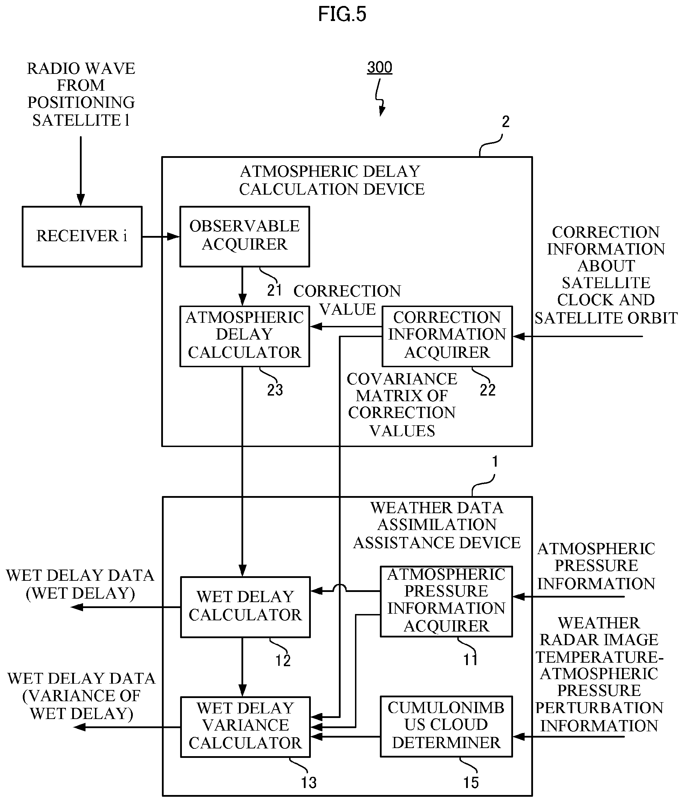

FIG. 5 illustrates a weather data assimilation assistance system 300 according to Embodiment 3. Similarly to the weather data assimilation assistance system 100, the weather data assimilation assistance system 300 includes the receiver i, the atmospheric delay calculation device 2, and a weather data assimilation assistance device 1. The receiver i and the atmospheric delay calculation device 2 each function in the same manner as in the weather data assimilation assistance system 100.

The weather data assimilation assistance device 1 includes, in addition to the atmospheric pressure information acquirer 11, the wet delay calculator 12, and the wet delay variance calculator 13, a cumulonimbus cloud determiner 15 that determines the amount of cumulonimbus cloud over the receiver i.

The cumulonimbus cloud determiner 15 determines the amount of cumulonimbus cloud over the receiver i using, as inputs, a weather radar image that is an image from a weather radar and temperature-atmospheric pressure perturbation information indicating perturbations in the temperature and the atmospheric pressure in other weather models. The cumulonimbus cloud determiner 15 calculates the error variance of the dry delay that is larger for a larger amount of cumulonimbus cloud above the receiver i. For example, the cumulonimbus cloud determiner 15 calculates the error variance of the dry delay that is directly proportional to the amount of cumulonimbus cloud over the receiver i. The cumulonimbus cloud determiner 15 transmits data indicating the calculated error variance of the dry delay to the wet delay variance calculator 13. The cumulonimbus cloud determiner 15 may also determine the amount of cumulonimbus cloud over the receiver i using, as an input as well, the variance of the atmospheric pressure indicated by the atmospheric pressure information acquired by the atmospheric pressure information acquirer 11.

The wet delay variance calculator 13 calculates the variance of the wet delay based on the atmospheric pressure information received from the atmospheric pressure information acquirer 11, the data indicating the wet delay received from the wet delay calculator 12, the covariance matrix of the correction values for the satellite clock and the satellite orbit received from the satellite clock-orbit correction information generator 14, and the data indicating the error variance of the dry delay received from the cumulonimbus cloud determiner 15. The other functional components are the same as in Embodiment 1.

The weather data assimilation assistance device 1 according to Embodiment 3 calculates the variance of the wet delay using the covariance matrix of the correction values for the satellite clock and the satellite orbit and provides the wet delay and the variance of the wet delay as the wet delay data, allowing more accurate estimation of an error included in the estimate of the wet delay. Additionally, using the amount of cumulonimbus cloud over the receiver i, the wet delay variance calculator 13 can calculate the variance of the wet delay with higher estimation accuracy.

Embodiment 4

The structure according to Embodiment 4 determines, in addition to implementing the structure according to Embodiment 1, the amount of cumulonimbus cloud over the receiver i and switches the method for calculating the wet delay between using the atmospheric pressure information alone and using a numerical weather model based on the determination result of the amount of cumulonimbus cloud over the receiver i.

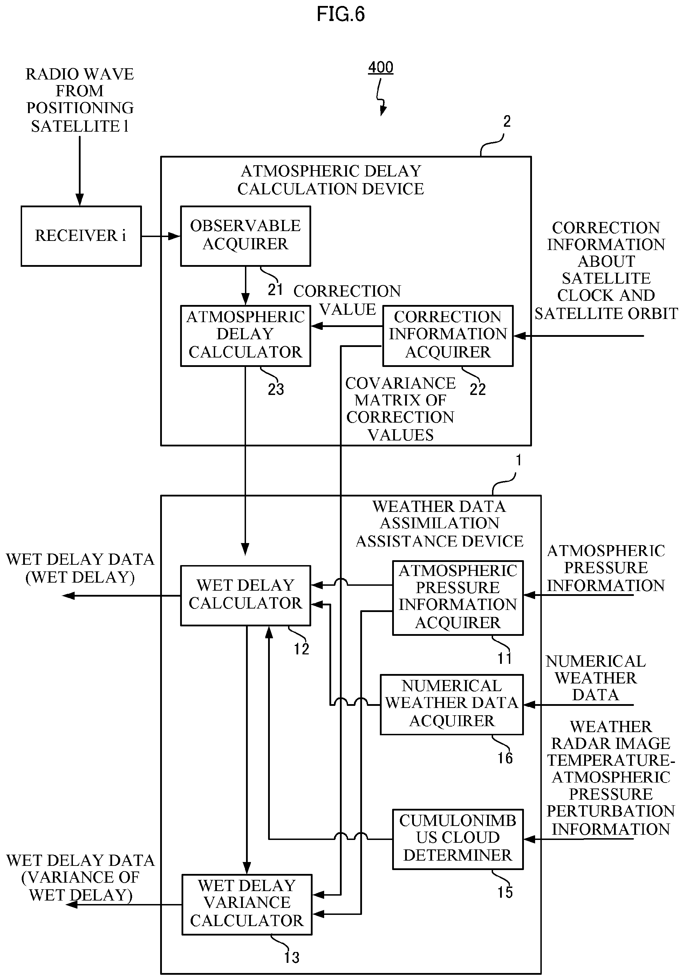

FIG. 6 illustrates a weather data assimilation assistance system 400 according to Embodiment 4. Similarly to the weather data assimilation assistance system 100 and the weather data assimilation assistance system 300, the weather data assimilation assistance system 400 includes the receiver i, the atmospheric delay calculation device 2, and a weather data assimilation assistance device 1. The receiver i and the atmospheric delay calculation device 2 each function in the same manner as in the weather data assimilation assistance system 100 and in the weather data assimilation assistance system 300.

The weather data assimilation assistance device 1 includes, in addition to the atmospheric pressure information acquirer 11, the wet delay calculator 12, the wet delay variance calculator 13, and the cumulonimbus cloud determiner 15, a numerical weather data acquirer 16 that acquires numerical weather data indicating the temperature and the atmospheric pressure.

The numerical weather data acquirer 16 transmits the acquired numerical weather data indicating the temperature and the atmospheric pressure to the wet delay calculator 12. The wet delay calculator 12 can switch the method for calculating the dry delay for calculating the wet delay between using the atmospheric pressure information alone and using a numerical weather model based on the numerical weather data. When calculating the dry delay using a numerical weather model, the wet delay calculator 12 calculates the dry delay using a prestored numerical weather model based on the numerical weather data received from the numerical weather data acquirer 16.

The cumulonimbus cloud determiner 15 determines the amount of cumulonimbus cloud over the receiver i using, as inputs, the weather radar image that is an image from a weather radar, and the temperature-atmospheric pressure perturbation information indicating perturbations in the temperature and the atmospheric pressure in other weather models. The cumulonimbus cloud determiner 15 transmits, to the wet delay calculator 12, an instruction to switch between calculating the dry delay using the atmospheric pressure information alone and calculating the dry delay using a numerical weather model based on the amount of cumulonimbus cloud over the receiver i. For example, when the amount of cumulonimbus cloud over the receiver i achieves hydrostatic equilibrium, the cumulonimbus cloud determiner 15 transmits, to the wet delay calculator 12, an instruction to calculate the dry delay using the atmospheric pressure information alone. When the amount of cumulonimbus cloud over the receiver i does not achieve hydrostatic equilibrium, the cumulonimbus cloud determiner 15 transmits, to the wet delay calculator 12, an instruction to calculate the dry delay using a numerical weather model. The other functional components are the same as in Embodiments 1 and 2.

The weather data assimilation assistance device 1 according to Embodiment 3 calculates the variance of the wet delay using the covariance matrix of the correction values for the satellite clock and the satellite orbit and provides the wet delay and the variance of the wet delay as the wet delay data, allowing more accurate estimation of an error included in the estimate of the wet delay. Additionally, with the wet delay calculator 12 switching the method for calculating the dry delay to a more appropriate method based on the amount of cumulonimbus cloud over the receiver i, the wet delay variance calculator 13 can calculate the wet delay with higher estimation accuracy.

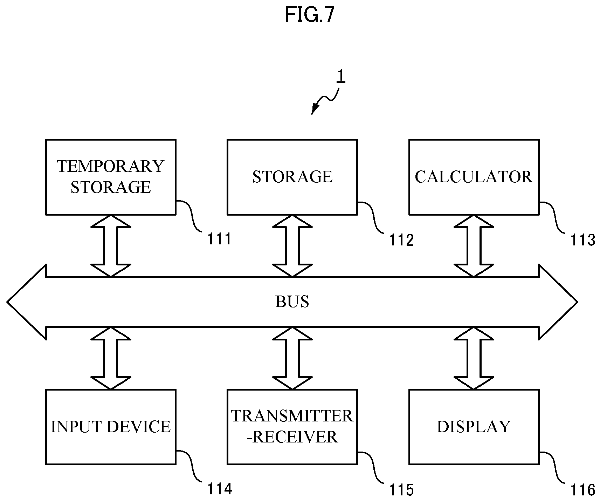

The hardware configuration of the weather data assimilation assistance device 1 is described with reference to FIG. 7. As illustrated in FIG. 7, the weather data assimilation assistance device 1 includes a temporary storage 111, a storage 112, a calculator 113, an input device 114, a transmitter-receiver 115, and a display 116. The temporary storage 111, the storage 112, the input device 114, the transmitter-receiver 115, and the display 116 are connected to the calculator 113 with a bus.

The calculator 113 is, for example, a central processing unit (CPU). The calculator 113 performs the processing of the wet delay calculator 12, the wet delay variance calculator 13, the satellite clock-orbit correction information generator 14, and the cumulonimbus cloud determiner 15 in the weather data assimilation assistance device 1 based on a control program stored in the storage 112.

The temporary storage 111 is, for example, a random-access memory (RAM). The control program stored in the storage 112 is loaded into the temporary storage 111. The temporary storage 111 is used as a work area for the calculator 113.

The storage 112 is a nonvolatile memory such as a flash memory, a hard disk, a digital versatile disc RAM (DVD-RAM), or a digital versatile disc rewritable (DVD-RW). The storage 112 prestores the program for causing the calculator 113 to perform the processing of the weather data assimilation assistance device 1, provides data stored in the program to the calculator 113 as instructed by the calculator 113, and stores data provided from the calculator 113.

The input device 114 includes input devices such as a keyboard and a pointing device. The input device 114 also includes an interface that connects the input devices, such as a keyboard and a pointing device, to the bus. Through the input device 114, information input by the user is provided to the calculator 113. In a structure in which an instruction to generate the wet delay data is input into the weather data assimilation assistance device 1, the user inputs the instruction into the input device 114.

The transmitter-receiver 115 is a network terminator or a wireless communication device connected to a network. The transmitter-receiver 115 is also a serial interface or a local area network (LAN) interface connected to the network terminator or the wireless communication device. The transmitter-receiver 115 functions as the atmospheric pressure information acquirer 11, the cumulonimbus cloud determiner 15, and the numerical weather data acquirer 16. In a structure in which the wet delay calculator 12 and the wet delay variance calculator 13 transmit the wet delay data to, for example, the user terminal and the weather data assimilation device, the transmitter-receiver 115 functions as the wet delay calculator 12 and the wet delay variance calculator 13.

The display 116 is, for example, a cathode ray tube (CRT) or a liquid crystal display (LCD). For example, the display 116 displays an operation screen with which the user inputs information. In a structure in which the user directly inputs an instruction into the weather data assimilation assistance device 1, the display 116 displays a screen for inputting the instruction. In a structure in which the wet delay calculator 12 and the wet delay variance calculator 13 display the wet delay data on a screen, the display 116 functions as the wet delay calculator 12 and the wet delay variance calculator 13.

The processing of the atmospheric pressure information acquirer 11, the wet delay calculator 12, the wet delay variance calculator 13, the satellite clock-orbit correction information generator 14, the cumulonimbus cloud determiner 15, and the numerical weather data acquirer 16 in the weather data assimilation assistance device 1 illustrated in FIGS. 1, 3, 4, 5, and 6 is performed when the control program is executed using, for example, the temporary storage 111, the calculator 113, the storage 112, the input device 114, the transmitter-receiver 115, and the display 116 as resources.

The hardware configuration and the flowcharts are mere examples, and may be changed or modified as appropriate.

The main components that perform the processing of the weather data assimilation assistance device 1 including the calculator 113, the temporary storage 111, the storage 112, the input device 114, the transmitter-receiver 115, and the display 116 can be implemented with a common computer system, rather than with a dedicated system. For example, a computer program executable to implement the above operation may be stored in a non-transitory computer-readable recording medium, such as a flexible disk, a compact disc read-only memory (CD-ROM), or a DVD-ROM for distribution. The computer program may be installed in a computer to implement the weather data assimilation assistance device 1 that performs the above processing. In some embodiments, the computer program may be stored in a storage device included in a server device on a communication network such as the Internet, and may be downloaded by a common computer system to implement the weather data assimilation assistance device 1.

In the system with the above functions of the weather data assimilation assistance device 1 implementable partially by the operating system (OS) and partially by an application program or through cooperation between the OS and the application program, portions executable by the application program other than the OS may be stored in a non-transitory recording medium or a storage device.

The computer program may be provided through a communication network. For example, the computer program may be posted on a bulletin board system (BBS) on the communication network to be provided through the communication network. The computer program may be activated and executed under the control of the OS in the same manner as another application program to perform the above processing.

In the above embodiments, the weather data assimilation assistance systems 100, 200, 200', 300, and 400 each include the atmospheric delay calculation device 2 and the weather data assimilation assistance device 1 separately. However, the weather data assimilation assistance device 1 may also function as the atmospheric delay calculation device 2.

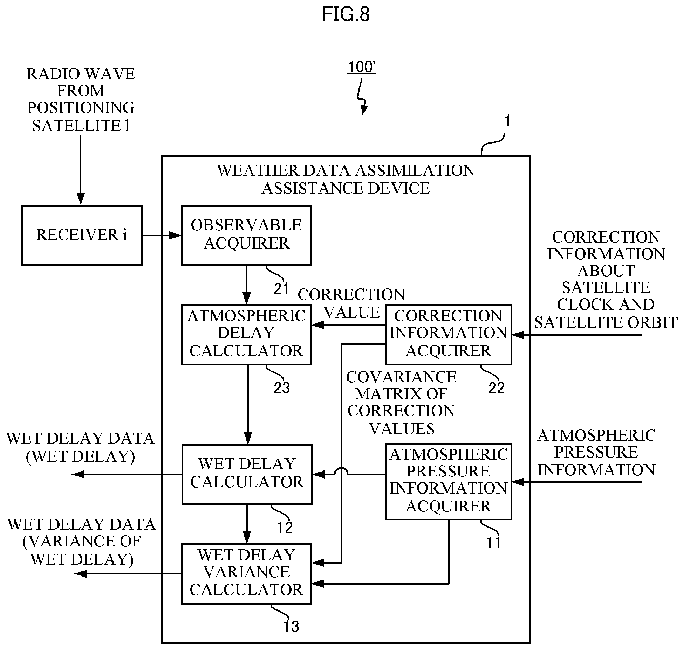

FIG. 8 illustrates a modification of the weather data assimilation assistance device 1 that also functions as the atmospheric delay calculation device 2 according to Embodiment 1. In a weather data assimilation assistance system 100' illustrated in FIG. 8, a weather data assimilation assistance device 1 includes the observable acquirer 21, the correction information acquirer 22, and the atmospheric delay calculator 23, in addition to the atmospheric pressure information acquirer 11, the wet delay calculator 12, and the wet delay variance calculator 13. Although not illustrated, the weather data assimilation assistance device 1 may include the receiver i.

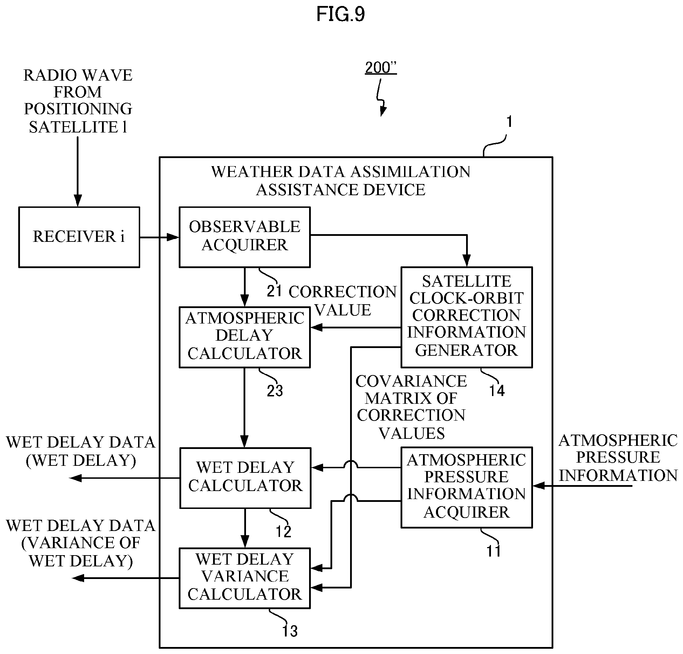

FIG. 9 illustrates a modification of the weather data assimilation assistance device 1 that also functions as the atmospheric delay calculation device 2 according to Embodiment 2. In a weather data assimilation assistance system 200" illustrated in FIG. 9, a weather data assimilation assistance device 1 includes the observable acquirer 21 and the atmospheric delay calculator 23, in addition to the atmospheric pressure information acquirer 11, the wet delay calculator 12, the wet delay variance calculator 13, and the satellite clock-orbit correction information generator 14. Although not illustrated, the weather data assimilation assistance device 1 may include the receiver i.

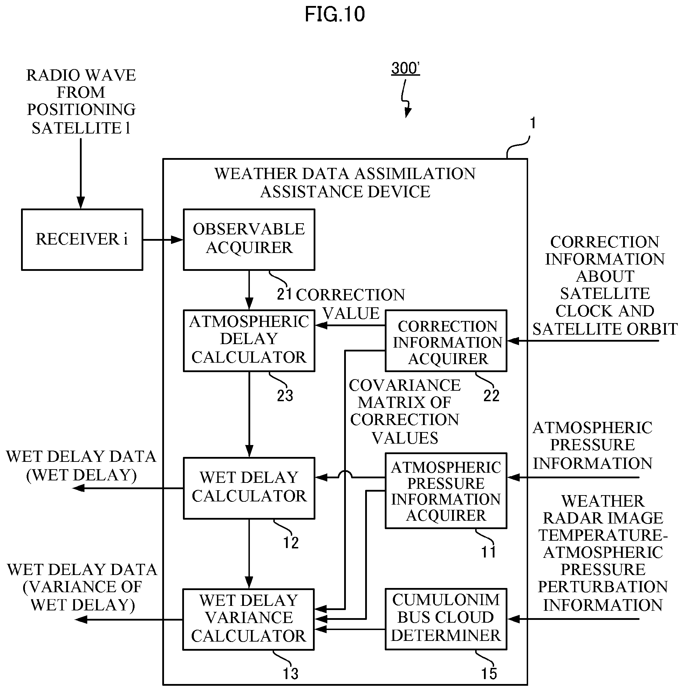

FIG. 10 illustrates a modification of the weather data assimilation assistance device 1 that also functions as the atmospheric delay calculation device 2 according to Embodiment 3. In a weather data assimilation assistance system 300' illustrated in FIG. 10, a weather data assimilation assistance device 1 includes the observable acquirer 21, the atmospheric delay calculator 23, and the correction information acquirer 22, in addition to the atmospheric pressure information acquirer 11, the wet delay calculator 12, the wet delay variance calculator 13, and the cumulonimbus cloud determiner 15. Although not illustrated, the weather data assimilation assistance device 1 may include the receiver i.

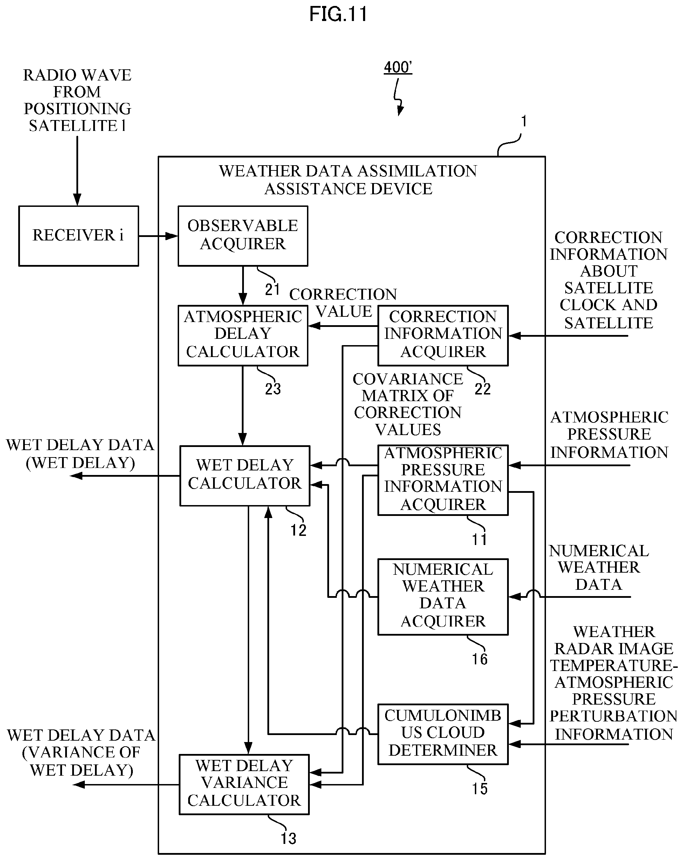

FIG. 11 illustrates a modification of the weather data assimilation assistance device 1 that also functions as the atmospheric delay calculation device 2 according to Embodiment 4. In a weather data assimilation assistance system 400' illustrated in FIG. 11, a weather data assimilation assistance device 1 includes the observable acquirer 21, the correction information acquirer 22, and the atmospheric delay calculator 23, in addition to the atmospheric pressure information acquirer 11, the wet delay calculator 12, the wet delay variance calculator 13, the cumulonimbus cloud determiner 15, and the numerical weather data acquirer 16. Although not illustrated, the weather data assimilation assistance device 1 may include the receiver i.

Although Embodiments 2, 3, and 4 are described separately, any or all of Embodiments 2, 3, and 4 may be combined.

In the above embodiments, the correction information about the satellite clock and the satellite orbit is used. However, the correction information about either the satellite clock or the satellite orbit may be used although the performance may be compromised.

In the above embodiments, the weather data assimilation assistance device 1 includes the atmospheric pressure information acquirer 11. However, the weather data assimilation assistance device 1 may include no atmospheric pressure information acquirer 11 when, for example, the wet delay calculator 12 and the wet delay variance calculator 13 each use a numerical weather model without using the atmospheric pressure information to calculate the wet delay or the wet delay variance.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

Reference Signs List

| | |
|---|---|
| 1 | Weather data assimilation assistance device |
| 2 | Atmospheric delay calculation device |
| 11 | Atmospheric pressure information acquirer |
| 12 | Wet delay calculator |
| 13 | Wet delay variance calculator |
| 14 | Satellite clock-orbit correction information generator |
| 15 | Cumulonimbus cloud determiner |
| 16 | Numerical weather data acquirer |
| 21 | Observable acquirer |
| 22 | Correction information acquirer |
| 23 | Atmospheric delay calculator |
| 100, 100', 200, 200', 200", 300, 300', 400, 400' | Weather data assimilation assistance system |
| 111 | Temporary storage |
| 112 | Storage |
| 113 | Calculator |
| 114 | Input device |
| 115 | Transmitter-receiver |
| 116 | Display |
| i | Receiver |
| l | Satellite |

**Claims**

1. A weather data assimilation assistance device, comprising:

   a wet delay calculator to calculate a wet delay in a satellite line-of-sight based on observable data and atmospheric delay data, and output data indicating the wet delay, the observable data indicating an observable of a radio wave from a positioning satellite measured by a receiver to receive the radio wave from the positioning satellite, the atmospheric delay data indicating an atmospheric delay in the satellite line-of-sight, the atmospheric delay being calculated based on a correction value for at least one of a satellite clock of the positioning satellite or a satellite orbit of the positioning satellite; and
   a wet delay variance calculator to calculate a variance of the wet delay based on the wet delay and a covariance matrix of the correction value for at least one of the satellite clock of the positioning satellite or the satellite orbit of the positioning satellite, and output data indicating the variance of the wet delay.

2. The weather data assimilation assistance device according to claim 1, further comprising:
   a satellite clock-orbit correction information generator to generate correction information including the correction value for at least one of the satellite clock or the satellite orbit and the covariance matrix of the correction value.

3. The weather data assimilation assistance device according to claim 1 or 2, further comprising:

   an atmospheric pressure information acquirer to acquire atmospheric pressure information indicating an atmospheric pressure at the receiver,
   wherein the wet delay calculator calculates a dry delay in the satellite line-of-sight based on the atmospheric pressure information, and calculates the wet delay by subtracting the dry delay from the atmospheric delay indicated by the atmospheric delay data.

4. The weather data assimilation assistance device according to claim 3, wherein
   the atmospheric pressure information acquirer acquires the atmospheric pressure information based on data indicating a latitude of the receiver and a date.

5. The weather data assimilation assistance device according to claim 3, wherein
   the atmospheric pressure information acquirer acquires the atmospheric pressure information from an atmospheric pressure sensor in the receiver.

6. The weather data assimilation assistance device according to any one of claims 3 to 5, further comprising:

   a cumulonimbus cloud determiner to determine an amount of cumulonimbus cloud over the receiver,
   wherein the cumulonimbus cloud determiner calculates an error variance of the dry delay, and the error variance of the dry delay is larger for a larger amount of cumulonimbus cloud over the receiver, and
   the wet delay variance calculator calculates the variance of the wet delay based on the atmospheric pressure information, the wet delay, the covariance matrix of the correction value for at least one of the satellite clock of the positioning satellite or the satellite orbit of the positioning satellite, and the error variance of the dry delay.

7. The weather data assimilation assistance device according to any one of claims 3 to 6, further comprising:

   a numerical weather data acquirer to acquire numerical weather data indicating a temperature and an atmospheric pressure; and
   a cumulonimbus cloud determiner to determine an amount of cumulonimbus cloud over the receiver,
   wherein the cumulonimbus cloud determiner transmits, to the wet delay calculator, an instruction to switch between, based on the amount of cumulonimbus cloud over the receiver, calculating the dry delay using the atmospheric pressure information alone and calculating the dry delay using a numerical weather model based on the numerical weather data, and
   the wet delay calculator switches between, as indicated by the instruction received from the cumulonimbus cloud determiner, calculating the dry delay using the atmospheric pressure information alone and calculating the dry delay using the numerical weather model.

8. A weather data assimilation assistance method implementable with a weather data assimilation assistance device, the method comprising:

   calculating a wet delay in a satellite line-of-sight based on observable data and atmospheric delay data, the observable data indicating an observable of a radio wave from a positioning satellite measured by a receiver to receive the radio wave from the positioning satellite, the atmospheric delay data indicating an atmospheric delay in the satellite line-of-sight, the atmospheric delay being calculated based on a correction value for at least one of a satellite clock of the positioning satellite or a satellite orbit of the positioning satellite;
   outputting data indicating the wet delay;
   calculating a variance of the wet delay based on the wet delay and a covariance matrix of the correction value for at least one of the satellite clock of the positioning satellite or the satellite orbit of the positioning satellite; and
   outputting data indicating the variance of the wet delay.

9. A program for causing a computer to function as:

   a wet delay calculator to calculate a wet delay in a satellite line-of-sight based on observable data and atmospheric delay data, the observable data indicating an observable of a radio wave from a positioning satellite measured by a receiver to receive the radio wave from the positioning satellite, the atmospheric delay data indicating an atmospheric delay in the satellite line-of-sight, the atmospheric delay being calculated based on a correction value for at least one of a satellite clock of the positioning satellite or a satellite orbit of the positioning satellite; and
   a wet delay variance calculator to calculate a variance of the wet delay based on the wet delay and a covariance matrix of the correction value for at least one of the satellite clock of the positioning satellite or the satellite orbit of the positioning satellite.

10. A weather data assimilation assistance system, comprising:

   a receiver to receive a radio wave from a positioning satellite;
   an atmospheric delay calculation device to calculate an atmospheric delay in a satellite line-of-sight based on observable data and a correction value, the observable data indicating an observable of the radio wave from the positioning satellite measured by the receiver, the correction value being a value for at least one of the observable data, a satellite clock of the positioning satellite, or a satellite orbit of the positioning satellite; and
   a weather data assimilation assistance device to calculate a wet delay in the satellite line-of-sight based on the atmospheric delay in the satellite line-of-sight calculated by the atmospheric delay calculation device, calculate a variance of the wet delay in the satellite line-of-sight based on the wet delay in the satellite line-of-sight and a covariance matrix of a correction value for at least one of the satellite clock of the positioning satellite or the

**EP 4 597 176 A1**

satellite orbit of the positioning satellite, and output data including the wet delay in the satellite line-of-sight and the variance of the wet delay in the satellite line-of-sight.

11. The weather data assimilation assistance system according to claim 10, wherein
the atmospheric delay calculation device includes a satellite clock-orbit correction information generator to generate correction information including the correction value for at least one of the satellite clock or the satellite orbit and the covariance matrix of the correction value.

**14**

## FIG.1

RADIO WAVE
FROM
POSITIONING
SATELLITE l

100

2

ATMOSPHERIC DELAY
CALCULATION DEVICE

RECEIVER i

OBSERVABLE
ACQUIRER

21

CORRECTION
VALUE

CORRECTION
INFORMATION
ABOUT
SATELLITE
CLOCK AND
SATELLITE ORBIT

ATMOSPHERIC
DELAY
CALCULATOR

CORRECTION
INFORMATION
ACQUIRER

23

COVARIANCE
MATRIX OF
CORRECTION
VALUES

22

1

WEATHER DATA
ASSIMILATION
ASSISTANCE DEVICE

ATMOSPHERIC
PRESSURE
INFORMATION

WET DELAY DATA
(WET DELAY)

WET DELAY
CALCULATOR

ATMOSPHERIC
PRESSURE
INFORMATION
ACQUIRER

12

WET DELAY DATA
(VARIANCE OF
WET DELAY)

WET DELAY
VARIANCE
CALCULATOR

11

13

## FIG.2

```
        ┌─────────────────────────────────┐
        │   WEATHER DATA ASSIMILATION      │
        │     ASSISTANCE PROCESS           │
        └─────────────────────────────────┘
                       │
                       ▼
        ┌─────────────────────────────────┐
        │   CALCULATE ZENITH DRY DELAY     │─── S11
        └─────────────────────────────────┘
                       │
                       ▼
        ┌─────────────────────────────────┐
        │      CALCULATE DRY DELAY         │─── S12
        └─────────────────────────────────┘
                       │
                       ▼
        ┌─────────────────────────────────┐
        │      CALCULATE WET DELAY         │─── S13
        └─────────────────────────────────┘
                       │
                       ▼
        ┌─────────────────────────────────┐
        │  OUTPUT WET DELAY DATA INCLUDING │─── S14
        │            WET DELAY             │
        └─────────────────────────────────┘
                       │
                       ▼
        ┌─────────────────────────────────┐
        │  CALCULATE VARIANCE OF WET DELAY │─── S15
        └─────────────────────────────────┘
                       │
                       ▼
        ┌─────────────────────────────────┐
        │  OUTPUT WET DELAY DATA INCLUDING │─── S16
        │     VARIANCE OF WET DELAY        │
        └─────────────────────────────────┘
                       │
                       ▼
                  ┌──────────┐
                  │   END    │
                  └──────────┘
```

FIG.3

RADIO WAVE
FROM
POSITIONING
SATELLITE l

200

2

ATMOSPHERIC DELAY
CALCULATION DEVICE

RECEIVER i

OBSERVABLE
ACQUIRER

21

ATMOSPHERIC
DELAY
CALCULATOR

23

CORRECTION
VALUE

1

WEATHER DATA
ASSIMILATION
ASSISTANCE DEVICE

WET DELAY DATA
(WET DELAY)

WET DELAY
CALCULATOR

12

SATELLITE
CLOCK-ORBIT
CORRECTION
INFORMATION
GENERATOR

14

COVARIANCE
MATRIX OF
CORRECTION
VALUES

WET DELAY DATA
(VARIANCE OF
WET DELAY)

WET DELAY
VARIANCE
CALCULATOR

13

ATMOSPHERIC
PRESSURE
INFORMATION
ACQUIRER

11

ATMOSPHERIC
PRESSURE
INFORMATION

FIG.4

RADIO WAVE
FROM
POSITIONING
SATELLITE l

200'

2

ATMOSPHERIC DELAY
CALCULATION DEVICE

RECEIVER i → OBSERVABLE
ACQUIRER

21

CORRECTION
VALUE

SATELLITE
CLOCK-ORBIT
CORRECTION
INFORMATION
GENERATOR

ATMOSPHERIC
DELAY
CALCULATOR

23

COVARIANCE
MATRIX OF
CORRECTION
VALUES

14

1

WET DELAY DATA
(WET DELAY)

WET DELAY
CALCULATOR

WEATHER DATA
ASSIMILATION
ASSISTANCE DEVICE

12

WET DELAY DATA
(VARIANCE OF
WET DELAY)

WET DELAY
VARIANCE
CALCULATOR

ATMOSPHERIC
PRESSURE
INFORMATION
ACQUIRER

ATMOSPHERIC
PRESSURE
INFORMATION

13

11

## FIG.5

RADIO WAVE
FROM
POSITIONING
SATELLITE l

300

2

ATMOSPHERIC DELAY
CALCULATION DEVICE

RECEIVER i

OBSERVABLE
ACQUIRER

21 CORRECTION
VALUE

ATMOSPHERIC
DELAY
CALCULATOR

CORRECTION
INFORMATION
ACQUIRER

CORRECTION
INFORMATION
ABOUT
SATELLITE
CLOCK AND
SATELLITE ORBIT

23

COVARIANCE
MATRIX OF
CORRECTION
VALUES

22

1

WEATHER DATA
ASSIMILATION
ASSISTANCE DEVICE

ATMOSPHERIC
PRESSURE
INFORMATION

WET DELAY DATA
(WET DELAY)

WET DELAY
CALCULATOR

ATMOSPHERIC
PRESSURE
INFORMATION
ACQUIRER

12

11

WEATHER
RADAR IMAGE
TEMPERATURE-
ATMOSPHERIC
PRESSURE
PERTURBATION
INFORMATION

WET DELAY DATA
(VARIANCE OF
WET DELAY)

WET DELAY
VARIANCE
CALCULATOR

CUMULONIMB
US CLOUD
DETERMINER

13

15

# FIG.6

400

2

ATMOSPHERIC DELAY CALCULATION DEVICE

RADIO WAVE FROM POSITIONING SATELLITE l

RECEIVER i

OBSERVABLE ACQUIRER

21

CORRECTION VALUE

ATMOSPHERIC DELAY CALCULATOR

23

CORRECTION INFORMATION ACQUIRER

22

CORRECTION INFORMATION ABOUT SATELLITE CLOCK AND SATELLITE ORBIT

COVARIANCE MATRIX OF CORRECTION VALUES

1

WEATHER DATA ASSIMILATION ASSISTANCE DEVICE

WET DELAY DATA (WET DELAY)

WET DELAY CALCULATOR

12

ATMOSPHERIC PRESSURE INFORMATION ACQUIRER

11

ATMOSPHERIC PRESSURE INFORMATION

NUMERICAL WEATHER DATA ACQUIRER

16

NUMERICAL WEATHER DATA

WEATHER RADAR IMAGE TEMPERATURE- ATMOSPHERIC PRESSURE PERTURBATION INFORMATION

CUMULONIMBUS CLOUD DETERMINER

15

WET DELAY DATA (VARIANCE OF WET DELAY)

WET DELAY VARIANCE CALCULATOR

13

FIG.7

TEMPORARY
STORAGE
111

STORAGE
112

CALCULATOR
113

BUS

INPUT DEVICE
114

TRANSMITTER
-RECEIVER
115

DISPLAY
116

FIG.8

RADIO WAVE
FROM
POSITIONING
SATELLITE l

100'

WEATHER DATA ASSIMILATION
ASSISTANCE DEVICE                              1

RECEIVER i → OBSERVABLE
ACQUIRER

21    CORRECTION
VALUE

CORRECTION
INFORMATION
ABOUT
SATELLITE
CLOCK AND
SATELLITE ORBIT

ATMOSPHERIC
DELAY
CALCULATOR ← CORRECTION
INFORMATION
ACQUIRER

23

COVARIANCE
MATRIX OF
CORRECTION
VALUES                              22

WET DELAY DATA
(WET DELAY) ← WET DELAY
CALCULATOR ← ATMOSPHERIC
PRESSURE
INFORMATION
ACQUIRER ← ATMOSPHERIC
PRESSURE
INFORMATION

12

WET DELAY DATA
(VARIANCE OF
WET DELAY) ← WET DELAY
VARIANCE
CALCULATOR

11

13

FIG.9

RADIO WAVE
FROM
POSITIONING
SATELLITE l

200"

1

WEATHER DATA ASSIMILATION
ASSISTANCE DEVICE

RECEIVER i → OBSERVABLE
ACQUIRER

21 CORRECTION
VALUE

SATELLITE
CLOCK-ORBIT
CORRECTION
INFORMATION
GENERATOR

ATMOSPHERIC
DELAY
CALCULATOR

23

COVARIANCE
MATRIX OF
CORRECTION
VALUES

14

WET DELAY DATA
(WET DELAY)

WET DELAY
CALCULATOR

ATMOSPHERIC
PRESSURE
INFORMATION
ACQUIRER

ATMOSPHERIC
PRESSURE
INFORMATION

12

11

WET DELAY DATA
(VARIANCE OF
WET DELAY)

WET DELAY
VARIANCE
CALCULATOR

13

## FIG.10

RADIO WAVE
FROM
POSITIONING
SATELLITE l

<u>300'</u>

1

WEATHER DATA ASSIMILATION
ASSISTANCE DEVICE

RECEIVER i → OBSERVABLE
ACQUIRER

21 CORRECTION
VALUE

ATMOSPHERIC
DELAY
CALCULATOR

CORRECTION
INFORMATION
ACQUIRER

CORRECTION
INFORMATION
ABOUT
SATELLITE
CLOCK AND
SATELLITE ORBIT

23

COVARIANCE
MATRIX OF
CORRECTION
VALUES

22

WET DELAY DATA
(WET DELAY)

WET DELAY
CALCULATOR

ATMOSPHERIC
PRESSURE
INFORMATION
ACQUIRER

ATMOSPHERIC
PRESSURE
INFORMATION

12

11

WEATHER
RADAR IMAGE
TEMPERATURE-
ATMOSPHERIC
PRESSURE
PERTURBATION
INFORMATION

WET DELAY DATA
(VARIANCE OF
WET DELAY)

WET DELAY
VARIANCE
CALCULATOR

CUMULONIM
BUS CLOUD
DETERMINER

13

15

FIG.11

RADIO WAVE
FROM
POSITIONING
SATELLITE l

400'

WEATHER DATA ASSIMILATION
ASSISTANCE DEVICE

1

RECEIVER i

OBSERVABLE
ACQUIRER

21

CORRECTION
VALUE

CORRECTION
INFORMATION
ABOUT
SATELLITE
CLOCK AND
SATELLITE

ATMOSPHERIC
DELAY
CALCULATOR

23

CORRECTION
INFORMATION
ACQUIRER

22

COVARIANCE
MATRIX OF
CORRECTION
VALUES

WET DELAY DATA
(WET DELAY)

WET DELAY
CALCULATOR

12

ATMOSPHERIC
PRESSURE
INFORMATION
ACQUIRER

11

ATMOSPHERIC
PRESSURE
INFORMATION

NUMERICAL
WEATHER
DATA
ACQUIRER

16

NUMERICAL
WEATHER
DATA

WEATHER
RADAR IMAGE
TEMPERATURE-
ATMOSPHERIC
PRESSURE
PERTURBATION
INFORMATION

CUMULONIMB
US CLOUD
DETERMINER

15

WET DELAY DATA
(VARIANCE OF
WET DELAY)

WET DELAY
VARIANCE
CALCULATOR

13

## INTERNATIONAL SEARCH REPORT

International application No.

**PCT/JP2022/035849**

### A. CLASSIFICATION OF SUBJECT MATTER

*G01W 1/08*(2006.01)i
FI: G01W1/08 Z

According to International Patent Classification (IPC) or to both national classification and IPC

### B. FIELDS SEARCHED

Minimum documentation searched (classification system followed by classification symbols)

G01W1/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-181913 A (NEC CASIO MOBILE COMMUNICATIONS LTD) 12 September 2013 (2013-09-12)<br>entire text, all drawings | 1-11 |
| A | JP 2007-85755 A (KDDI CORP) 05 April 2007 (2007-04-05)<br>entire text, all drawings | 1-11 |
| A | JP 2016-31621 A (HITACHI SHIPBUILDING ENG CO) 07 March 2016 (2016-03-07)<br>entire text, all drawings | 1-11 |
| A | JP 2004-150901 A (COMMUNICATION RESEARCH LABORATORY) 27 May 2004 (2004-05-27)<br>entire text, all drawings | 1-11 |
| A | JP 2014-153087 A (MITSUBISHI ELECTRIC CORP) 25 August 2014 (2014-08-25)<br>entire text, all drawings | 1-11 |
| A | US 2015/0212236 A1 (INTERNATIONAL BUSINESS MACHINES CORPORATION) 30 July 2015 (2015-07-30)<br>entire text, all drawings | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 November 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
|---|
| **PCT/JP2022/035849** |

### C. DOCUMENTS CONSIDERED TO BE RELEVANT

| Category* | Citation of document, with indication, where appropriate, of the relevant passages | Relevant to claim No. |
|---|---|---|
| A | CN 113189620 A (NATIONAL SPACE SCIENCE CENTER, CAS) 30 July 2021 (2021-07-30) <br> entire text, all drawings | 1-11 |
| A | CN 101526516 A (INSTITUTE OF GEODESY & GEOPHYSICS, CHINESE ACADEMY OF SCIENCES) 09 September 2009 (2009-09-09) <br> entire text, all drawings | 1-11 |
| A | 赤間慶, 進行方向仮説型時空間フーリエ変換を用いた伝搬性電離層擾乱の電子密度分布推定, 電子情報通信学会論文誌 B(Web), vol. J105-B no. 6. 01 June 2022, pp. 484-492 <br> entire text, all drawings, (AKAMA, Kei. Estimation of Traveling Ionospheric Disturbance Distribution Using Traveling Direction Hypothesis Time-Space Fourier Transform. IEICE trans. B (Web).) | 1-11 |

Form PCT/ISA/210 (second sheet) (January 2015)

**INTERNATIONAL SEARCH REPORT**
Information on patent family members

International application No.

**PCT/JP2022/035849**

| Patent document cited in search report | | | Publication date (day/month/year) | Patent family member(s) | Publication date (day/month/year) |
|---|---|---|---|---|---|
| JP | 2013-181913 | A | 12 September 2013 | (Family: none) | |
| JP | 2007-85755 | A | 05 April 2007 | (Family: none) | |
| JP | 2016-31621 | A | 07 March 2016 | (Family: none) | |
| JP | 2004-150901 | A | 27 May 2004 | (Family: none) | |
| JP | 2014-153087 | A | 25 August 2014 | (Family: none) | |
| US | 2015/0212236 | A1 | 30 July 2015 | (Family: none) | |
| CN | 113189620 | A | 30 July 2021 | (Family: none) | |
| CN | 101526516 | A | 09 September 2009 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017207459 A

**Non-patent literature cited in the description**

- **YOSHINORI SHOJI et al.** GPS Meteorology: Research on the Construction of GPS Water Vapor Information System and Application to Meteorology, Geodesy, and Hydrology. *Journal of the Geodetic Society of Japan*, 2009, vol. 55 (1)

- **PRATAP MISRA**. Per Enge, Global Positioning System: Signals, Measurements, and Performance. Japan Institute of Navigation
- **A. ROVIRA-GARCIA et al.** Fast Precise Point Positioning: A System to Provide 1 Correction for Single and Multi-frequency Navigation. *Navigation*, 2016, vol. 63 (3)